# EUROPEAN PATENT SPECIFICATION

(11) **EP 1 074 694 B1**
(45) Date of publication and mention of the grant of the patent: **09.08.2006**
(21) Application number: 00304398.1
(22) Date of filing: 24.05.2000
(51) Int. Cl.: F01D 5/08, F01D 25/12

(54) **Apparatus and methods for cooling rotary components in a turbine**
Einrichtung und Methode zur Kühlung von rotierenden Komponenten bei Turbinen
Dispositif et méthode de refrodissement des éléments rotatifs des turbines

(30) Priority: 04.08.1999 US 368121
(43) Date of publication of application: 07.02.2001
(73) Proprietor: GENERAL ELECTRIC COMPANY, Schenectady, NY 12345 (US)
(72) Inventor: Schroeder, Mark Stewart, Hendersonville, North Carolina 28739 (US); Butkiewicz, Jeffrey John, Simpsonville, South Carolina 29680 (US)
(74) Representative: Pedder, James Cuthbert

(56) References cited:
- GB-A- 2 075 123
- US-A- 3 565 545
- US-A- 3 602 605
- US-A- 4 674 955

## Description

The present invention relates to a cooling system for cooling rotary components of a turbine and particularly relates to a cooling system for imparting cooling flow in the same general circumferential direction of the rotary component to be cooled.

In turbomachinery, for example, a turbine and compressor combination, various rotating parts of the machinery must be cooled. To accomplish this, compressor discharge air is typically bled from the compressor. Continued demand for increased machine performance has resulted in increasing coolant supply temperatures and reduced bleed or parasitic flow allocated for cooling hardware. That is, machine performance degrades as increasing proportions of compressor discharge air are applied for cooling purposes. A particular problem arises in cooling rotating parts, for example, the flange connection between the compressor and turbine rotor. As a result of increased heat applied to the cooling medium in reaching the surface velocity of the rotating component, reduced cooling effect occurs and the requirement for parasitic cooling flow increases. Accordingly, there is a demonstrable need for a turbomachinery cooling system wherein the work necessary to cool the rotating components is substantially reduced, resulting in decreased parasitic cooling flow.

US 4,674,955 discloses an arrangement for cooling turbine blades, in which overswirled cooling air is injected radially inwardly into a passage in the turbine rotor.

US 3, 565, 545 discloses a turbine in which a nozzle is provided to introduce cooling air in an axial direction relative to openings in the turbine rotor, the cooling air flowing through the openings to provide cooling for the turbine buckets.

According to the present invention there is provided a turbomachine comprising a turbine, a compressor, a component rotatable about an axis and in a cavity, a fixed component about said rotatable component and said cavity, and a cooling system, comprising a bleed air passageway for diverting a portion of compressor discharge air for cooling the rotatable component; a plurality of discrete, generally axially extending passages in communication with said bleed passageway for flowing the bleed air into said cavity; further comprising vanes in said passages for turning the air flow direction of the bleed air flowing into said cavity in a generally circumferential direction and in the general direction of rotation of said rotatable component to cool said rotatable component.

In accordance with a preferred embodiment of the present invention, air is bled from the compressor discharge and supplied to a plurality of generally axially extending bleed air passages. The passages, for example, may lie within the inner barrel on the compressor side of the flange connections between the turbine and compressor rotors. Preferably, the bleed air is supplied to a plenum on the upstream side of the passages such that the passages flow the compressor discharge bleed air into a downstream cavity surrounding the rotor flanges. The generally axially flowing bleed compressor discharge air in the passages is turned in a generally circumferential direction, i.e., generally tangential to the direction of rotation of the rotary component, e.g., the rotor flanges. The air is turned by locating one or more vanes at the exit of the passages for flowing cooling air into the cavity in a generally tangential direction and in the same direction of rotation of the rotary component. By injecting the cooling air tangentially with rotation, minimal work is performed by the turbomachinery in flowing the cooling air tangentially of the rotating component, thereby affording a lower cooling temperature. The lower temperature results from less windage heatup of the cooling air in approaching the tangential surface velocity of the rotating component. Reduced windage also provides a performance benefit and less transfer of work from the rotor to the coolant.

Leakage flow from the bleed air plenum between the stationary component surrounding the rotary component is provided through a leakage seal. The seal may be in the form of a labyrinth seal, brush seal, combination labyrinth or brush seals or other types of seals. The leakage seal provides a pressure differential across the bleed air supply plenum and the cavity, affording increased velocity of the cooling air flowing from the vanes into the cavity in the general direction of rotation of the rotary component. Consequently, by providing as effective a leakage seal as possible, a lower coolant temperature is achieved with corresponding reduction in the magnitude of the parasitic flow extracted from the compressor discharge flow path necessary for cooling purposes.

In a preferred embodiment according to the present invention, there is provided in turbomachinery having a turbine, a compressor, a component rotatable about an axis and in a cavity, and a fixed component about the rotatable component and the cavity, a cooling system, comprising a bleed air passageway for diverting a portion of compressor discharge air for cooling the rotating component, a plurality of discrete, generally axially extending passages in communication with the bleed passageway for flowing the bleed air into the cavity and vanes in the passages for turning the bleed air flowing into the cavity in a generally circumferential direction and in the general direction of rotation of the rotatable component to cool the rotatable component.

In a further preferred embodiment according to the present invention, there is provided in turbomachinery having a turbine, a compressor, a component rotatable about an axis, and a fixed component about the rotatable component, a method of cooling the rotatable component, comprising the steps of bleeding compressor discharge air into a passageway, flowing portions of the bleed air into a plurality of generally axially extending passages in communication with the air portion bled from the compressor discharge air and turning the bleed air portions flowing in the passages in a generally circumferential direction for discharge onto the rotatable component and in the same general direction as the rotation of the rotary component to cool the rotary component.

The invention will now be described in greater detail, by way of example, with reference to the drawings, in which:
FIGURE 1 is a fragmentary cross-sectional view of a turbomachine illustrating a cooling system according to a preferred embodiment of the present invention;
FIGURE 2 is an enlarged fragmentary cross-sectional view illustrating a nozzle for the cooling air;
FIGURE 3 is a cross-sectional view thereof taken generally about on line 3-3 in Figure 2; and
FIGURE 4 is a fragmentary cross-sectional view taken generally about line 4-4 in Figure 1.

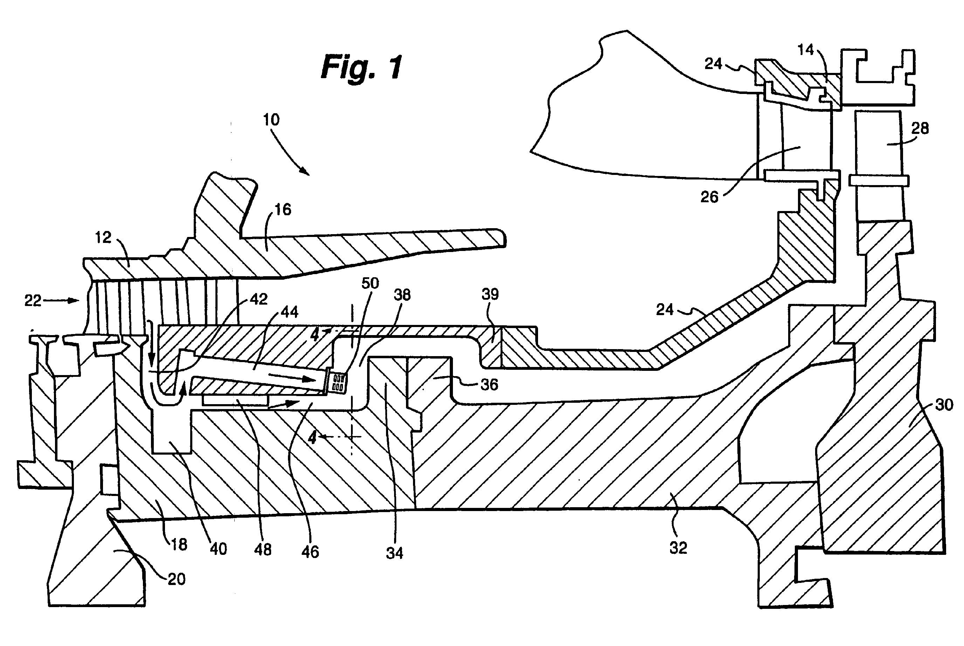

Referring now to the drawing figures, particularly to Figure 1, there is illustrated a turbomachine, generally designated 10, and incorporating a cooling system according to a preferred embodiment of the present invention. The turbomachine 10 includes a compressor section 12 and a turbine section 14. The compressor section 12 comprises an outer fixed or stationary component 16 and a rotor 18 joined to compressor wheels 20 mounting compressor blades. It will be appreciated that air is compressed along an annular flow path, designated by the arrow 22, and flows into the turbine section 14.

Turbine section 14 includes a fixed or stationary component 24 and a plurality of turbine stages, each including a stator blade 26 and a turbine blade 28 rotatable on a turbine wheel 30 forming part of the turbine rotor 32. The adjoining ends of the compressor rotor 18 and turbine rotor 32 carry flanges 34 and 36, respectively, which are rabbeted and bolted to one another by bolts, not shown and form a rotary component within a cavity 38 surrounded by a fixed component, e.g., an inner barrel 39.

In accordance with a preferred embodiment of the present invention, a cooling system is provided for metering desired bypass flow mixed with seal leakage for cooling the flange connection of the rotors, efficiently turning the flow from axial to a desired circumferential direction to lower the temperature of the cooling flow for rotor conditioning and directing the flow at an optimum location within the flange cavity 38 for mixing with seal leakage and conditioning the flange. Particularly, bleed air is taken from the compressor discharge air flowing in annular passage 22 for flow into an annular plenum 40 in the compressor rotor 18. One or more of the bleed air passageways 42 may be provided for supplying plenum 40 with bleed air. A plurality of discrete, generally axially extending passages 44 is provided at circumferentially spaced positions about the compressor rotor 18 for flowing compressor bleed air from the plenum 40 into the cavity 38. Additionally, an annular leakage flow path 46 between the stationary component and the compressor rotor 18 is provided with a leakage seal 48. For example, the leakage seal may comprise a plurality of labyrinth seals or brush seals or a combination of labyrinth/brush seals or other types of seals. Suffice to say that the annular leakage flow path 46 with the leakage seal 48 creates a pressure drop between the plenum 40 and the cavity 38.

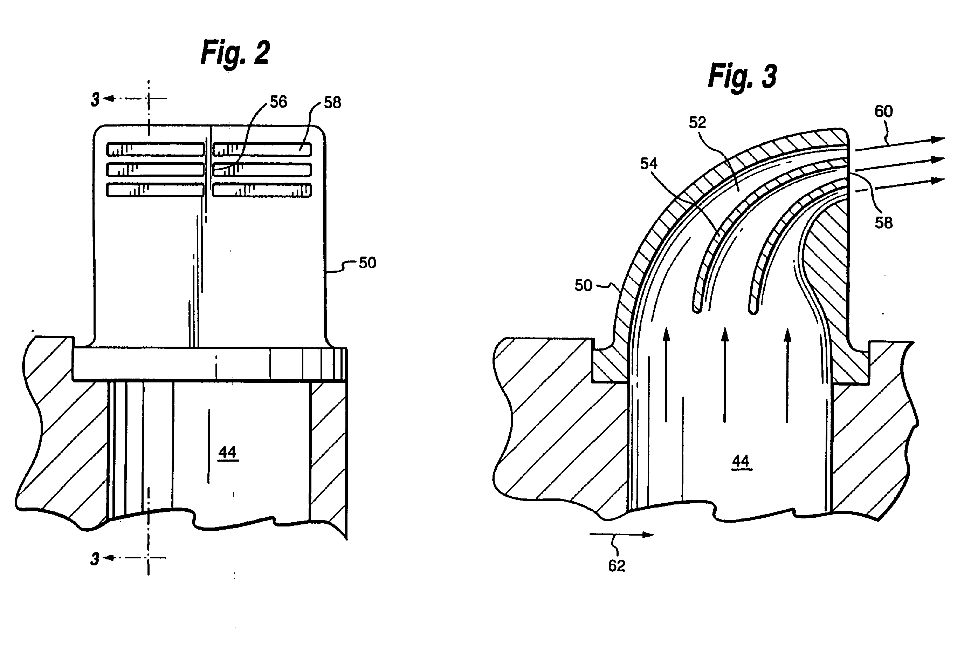

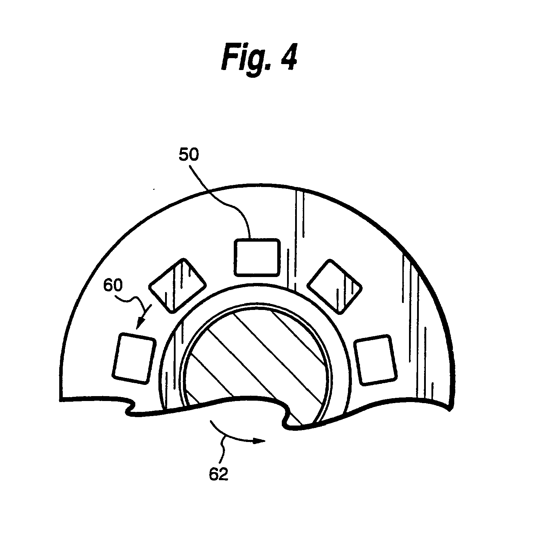

Each of the exit ends of the passages 44 includes one or more vanes comprising a swirl device 50. As illustrated in Figures 2 and 3, the device 50 has a plurality of internal flow paths 52 defined by vanes 54 for turning the bleed air flowing in passage 44 toward a tangential or circumferential direction of rotation of the flanges in cavity 38. That is, the bleed air flowing through each passage 44 is turned into a generally tangential direction in the direction of rotation of the flanges 34 and 36 whereby the bleed air flowing from swirl devices 50 exits at a velocity approaching the tangential velocity of the flanges 34 and 36. A central rib 56 is provided between the generally rectilinear slots 58 forming exits for the bleed discharge air being turned along the flow paths 52. The direction of the exiting air is indicated by the arrows 60 in Figure 4 and the direction of rotation of the compressor rotor 18 is indicated by the arrow 62. Consequently, it will be appreciated that the compressor bleed discharge air exits the swirl devices at a substantially lower temperature than would otherwise be the case if the air was flowing directly axially into the cavity 38. Moreover, the compressor discharge bleed air does not pick up additional heat due to windage and thus less parasitic or bleed air is required for cooling purposes.

The foregoing-described construction has additional advantages. For example, the swirl devices 50 can be tuned, i.e., the vanes can be directed at certain angles and aimed at certain defined locations. Because the swirl devices can be bolted or welded in place, the swirl devices are readily modified if fine adjustments in the cooling system are required. It will also be appreciated that the leakage flow past the leakage seal 48 creates a pressure drop between the cavity 38 and the plenum 40. By limiting the leakage flow, the pressure drop can be increased, hence increasing the velocity of the cooling air supplied cavity 38. Increased velocity, of course, results in a cooling air temperature lower than otherwise would be the case with improved performance of the turbo-machine.

## Claims

1. A turbomachine comprising:
a turbine (14),
a compressor (12),
a component (34, 36) rotatable about an axis and in a cavity (38),
a fixed component (39) about said rotatable component and said cavity, and
a cooling system, comprising:
a bleed air passageway (42) for diverting a portion of compressor discharge air for cooling the rotatable component;
a plurality of discrete, generally axially extending passages (44) in communication with said bleed passageway for flowing the bleed air into said cavity; further comprising
vanes (54) in said passages for turning the air flow direction of the bleed air flowing into said cavity in a generally circumferential direction and in the general direction of rotation of said rotatable component to cool said rotatable component.

2. The turbomachine according to Claim 1, wherein the cooling system includes a leakage flow path (46) between said passageway and said cavity, a leakage seal (48) between said fixed component and said rotatable component in said leakage flow path causing a pressure drop between said passageway and said cavity to increase the circumferential velocity of the air exiting the vanes into said cavity.

3. The turbomachine according to Claim 1 or 2 wherein said rotatable component comprises a turbine rotor and a compressor rotor, flanges (34, 36) of said turbine rotor and said compressor rotor being joined to one another and being located in said cavity, said vanes turning the bleed air onto and in the direction of rotation of the flanges.

4. The turbomachine according to any preceding Claim, wherein said passageway communicates with a plenum (40), said passages lying in communication with said plenum to flow the bleed air from said plenum and through said vanes.

5. The turbomachine according to Claim 1, wherein the cooling system includes a leakage flow path (46) between said passageway and said cavity, a leakage seal (48) between said fixed component and said rotatable component in said leakage flow path causing a pressure drop between said passageway and said cavity to increase the circumferential velocity of the air exiting the vanes into said cavity, said rotatable component comprising a turbine rotor and a compressor rotor, flanges (34, 36) of said turbine rotor and said compressor rotor being joined to one another and being located in said cavity, said vanes turning the bleed air onto and in the direction of rotation of the flanges.

6. The turbomachine according to Claim 5 wherein said passageway (42) communicates with a plenum (40), said passages lying in communication with said plenum to flow the bleed air from said plenum and through said vanes, said passages being circumferentially spaced from one another about said axis.

7. The turbomachine according to Claim 1 wherein said rotatable component comprises a turbine rotor and a compressor rotor, flanges (34, 36) of said turbine rotor and said compressor rotor being joined to one another and being located in said cavity, said vanes (54) turning the bleed air onto and in the direction of rotation of the flanges, said passages being circumferentially spaced from one another about said axis, said vanes being disposed at exits of said passages and in said cavity.

## Patentansprüche

1. Turbomaschine, die aufweist:
eine Turbine (14),
einen Kompressor (12),
eine Komponente (34, 36), die um eine Achse und in einem Hohlraum (38) drehbar ist,
eine feststehende Komponente (39) um die drehbare Komponente und den Hohlraum herum und
ein Kühlsystem, das aufweist:
einen Abzapfluftdurchgang (42) zum Ableiten eines Teils der Kompressoraustrittsluft zum Kühlen der drehbaren Komponente,
eine Mehrzahl von diskreten, sich im Wesentlichen axial erstreckenden Kanälen (44) in Verbindung mit dem Abzapfluftdurchgang zum Leiten der Abzapfluft in den Hohlraum, wobei das Kühlsystem weiterhin aufweist:
Leitschaufeln (54) in den Kanälen zum Lenken der Richtung des Luftstroms der Abzapfluft, die in den Hohlraum hinein strömt, im Wesentlichen in Umfangsrichtung in die gewöhnliche Drehrichtung der drehbaren Komponente, um die drehbare
Komponente zu kühlen.

2. Turbomaschine nach Anspruch 1, bei der das Kühlsystem einen Leckflusspfad (46) zwischen dem Durchgang und dem Hohlraum aufweist, wobei eine Leckflussdichtung (48) zwischen der feststehenden Komponente und der drehbaren Komponente in dem Leckflusspfad einen Druckabfall zwischen dem Durchgang und dem Hohlraum hervorruft, um die Umfangsrichtungsgeschwindigkeit der aus den Leitschaufeln in den Hohlraum hinein austretenden Luft zu erhöhen.

3. Turbomaschine nach einem der Ansprüche 1 oder 2, bei der die drehbare Komponente einen Turbinenrotor und einen Kompressorrotor aufweist, wobei Flansche (34, 36) des Turbinenrotors und des Kompressorrotors miteinander verbunden und in dem Hohlraum angeordnet sind, wobei die Leitschaufeln die Abzapfluft auf die Flansche und in die Richtung der Drehung derselben lenken.

4. Turbomaschine nach einem der vorhergehenden Ansprüche, bei der der Durchgang mit einer Kammer (40) in Verbindung steht, wobei die Kanäle in Verbindung mit der Kammer angeordnet sind, um Abzapfluft aus der Kammer durch die Leitschaufeln zu leiten.

5. Turbomaschine nach Anspruch 1, bei der das Kühlsystem einen Leckflusspfad (46) zwischen dem Durchgang und dem Hohlraum aufweist, wobei eine Leckflussdichtung (48) zwischen der feststehenden Komponente und der drehbaren Komponente in dem Leckflusspfad einen Druckabfall zwischen dem Durchgang und dem Hohlraum hervorruft, um die Umfangsrichtungsgeschwindigkeit der aus den Leitschaufeln in den Hohlraum hinein austretenden Luft zu erhöhen, wobei die drehbare Komponente einen Turbinenrotor und einen Kompressorrotor aufweist, wobei Flansche (34, 36) des Turbinenrotors und des Kompressorrotors miteinander verbunden und in dem Hohlraum angeordnet sind, wobei die Leitschaufeln die Abzapfluft auf die Flansche und in die Richtung der Drehung derselben lenken.

6. Turbomaschine nach Anspruch 5, bei der der Durchgang (42) mit einer Kammer (40) in Verbindung steht, wobei die Kanäle in Verbindung mit der Kammer angeordnet sind, um Abzapfluft aus der Kammer durch die Leitschaufeln zu leiten, wobei die Kanäle um die Achse herum in Umfangsrichtung voneinander beabstandet sind.

7. Turbomaschine nach Anspruch 1, bei der die drehbare Komponente einen Turbinenrotor und einen Kompressorrotor aufweist, wobei Flansche (34, 36) des Turbinenrotors und des Kompressorrotors miteinander verbunden und in dem Hohlraum angeordnet sind, wobei die Leitschaufeln (54) die Abzapfluft auf die Flansche und in die Richtung der Drehung derselben lenken, wobei die Kanäle um die Achse herum in Umfangsrichtung voneinander beabstandet sind, wobei die Leitschaufeln an den Ausgängen der Kanäle in dem Hohlraum angeordnet sind.

## Revendications

1. Turbomachine comprenant :
une turbine (14),
un compresseur (12),
un organe (34, 36) pouvant tourner autour d'un axe et dans une cavité (38),
un organe fixe (39) autour dudit organe rotatif et de ladite cavité, et
un système de refroidissement, comprenant :
un conduit d'air de prélèvement (42) pour dévier une partie de l'air de décharge de compresseur afin de refroidir l'organe rotatif ;
une pluralité de passages discrets s'étendant globalement axialement (44) en communication avec ledit conduit de prélèvement pour faire écouler l'air de prélèvement dans ladite cavité ; comprenant en outre
des aubes (54) dans lesdits passages pour que la direction d'écoulement d'air de l'air de prélèvement s'écoulant dans ladite cavité prenne une direction globalement circonférentielle et la direction générale de rotation dudit organe rotatif pour refroidir ledit organe rotatif.

2. Turbomachine selon la revendication 1, dans laquelle le système de refroidissement comprend un chemin d'écoulement de fuite (46) entre ledit conduit et ladite cavité, un joint antifuite (48) entre ledit organe fixe et ledit organe rotatif dans ledit chemin d'écoulement de fuite provoquant une chute de pression entre ledit conduit et ladite cavité pour augmenter la vitesse circonférentielle de l'air passant des aubes à ladite cavité.

3. Turbomachine selon la revendication 1 ou 2, dans laquelle ledit organe rotatif comprend un rotor de turbine et un rotor de compresseur, des rebords (34, 36) dudit rotor de turbine et dudit rotor de compresseur étant liés l'un à l'autre et situés dans ladite cavité, lesdites aubes déviant l'air de prélèvement sur ces rebords et dans le sens de rotation de ces derniers.

4. Turbomachine selon l'une quelconque des revendications précédentes, dans laquelle ledit conduit communique avec une chambre de tranquillisation (40), lesdits passages étant en communication avec ladite chambre de tranquillisation pour faire s'écouler l'air de prélèvement depuis ladite chambre de tranquillisation et dans lesdits aubes.

5. Turbomachine selon la revendication 1, dans laquelle le système de refroidissement comprend un chemin d'écoulement de fuite (46) entre ledit conduit et ladite cavité, un joint antifuite (48) entre ledit organe fixe et ledit organe rotatif dans ledit chemin d'écoulement de fuite provoquant une chute de pression entre ledit conduit et ladite cavité pour augmenter la vitesse circonférentielle de l'air passant des aubes à ladite cavité, ledit organe rotatif comprenant un rotor de turbine et un rotor de compresseur, des rebords (34, 36) dudit rotor de turbine et dudit rotor de compresseur étant liés l'un à l'autre et situés dans ladite cavité, lesdites aubes déviant l'air de prélèvement sur ces rebords et dans le sens de rotation de ces derniers.

6. Turbomachine selon la revendication 5, dans laquelle ledit conduit (42) communique avec une chambre de tranquillisation (40), lesdits passages étant en communication avec ladite chambre de tranquillisation pour faire s'écouler l'air de prélèvement depuis ladite chambre de tranquillisation et dans lesdits aubes, lesdits passages étant espacés circonférentiellement les uns des autres autour dudit axe.

7. Turbomachine selon la revendication 1, dans laquelle ledit organe rotatif comprend un rotor de turbine et un rotor de compresseur, des rebords (34, 36) dudit rotor de turbine et dudit rotor de compresseur étant liés l'un à l'autre et situés dans ladite cavité, lesdites aubes (54) déviant l'air de prélèvement sur ces rebords et dans le sens de rotation de ces derniers, lesdits passages étant espacés circonférentiellement les uns des autres autour dudit axe, lesdites aubes étant placées aux sorties desdits passages et dans ladite cavité.
